# EUROPÄISCHE PATENTSCHRIFT

(11) **EP 1 252 964 B1**
(45) Veröffentlichungstag und Bekanntmachung des Hinweises auf die Patenterteilung: **15.08.2007**
(21) Anmeldenummer: 02005096.9
(22) Anmeldetag: 07.03.2002
(51) Int. Cl.: B23K 11/00, B23K 9/20

(54) **Bolzenschweisssystem**
Stud welding device
Système de soudage de goujons

(30) Priorität: 28.04.2001 DE 10121059
(43) Veröffentlichungstag der Anmeldung: 30.10.2002
(73) Patentinhaber: Bayerische Motoren Werke Aktiengesellschaft, 80809 München (DE)
(72) Erfinder: Wimmer, Franz, 84160 Frontenhausen (DE); Wolloner, Günther, 84175 Gerzen (DE); Ettengruber, Franz, 94436 Simbach (DE)

(56) Entgegenhaltungen:
- PATENT ABSTRACTS OF JAPAN Bd. 0040, Nr. 64 (M-011), 14. Mai 1980 (1980-05-14) & JP 55 030329 A (POTSUPURIBETSUTO FASTENER KK), 4. März 1980 (1980-03-04)
- PATENT ABSTRACTS OF JAPAN Bd. 1995, Nr. 02, 31. März 1995 (1995-03-31) & JP 6 328250 A (HONDA MOTOR CO LTD), 29. November 1994 (1994-11-29)

## Beschreibung

Die Erfindung betrifft ein Bolzenschweißsystem, insbesondere zum Verschweißen von T-Bolzen an Rohkarosserieteilen, nach dem Oberbegriff des Patentanspruchs 1, sowie ein Verfahren zum Positionieren eines robotergesteuerten Bolzenschweißkopfes in einem als Funktionsmaß vorgegebenen Abstand der Bolzenvorschubachse zu einer Werkstückkontur.

Schweißbolzen mit erweitertem Kopf, sogenannte T-Bolzen, werden in der Automobilindustrie häufig benötigt, um Anbauteile an einem mit derartigen Bolzen ausgerüsteten Rohkarosserieteil, etwa eine Dachleiste am Dachkanal eines Kraftfahrzeugs, sicher zu verankern. Während der eigentliche Schweißprozess nach dem Stand der Technik, z. B. im Wege des Hubzündverfahrens unter Verwendung von hydraulischen oder pneumatischen Linearantrieben zur Hubsteuerung des Schweißgerätekopfes in Bolzenvorschubrichtung nach der DE 30 38 557 A1 oder der DE 44 27 370 C1, weitgehend problemlos durchführbar ist, ist eine maßgenaue Ansteuerung des Schweißgerätekopfes in die Schweißposition, gegeben durch ein auf die Werkstückkontur bezogenes Funktionsmaß, mit erheblichen Schwierigkeiten verbunden. So ist eine manuelle Positionierung des Gerätekopfes mit Hilfe von werkstückspezifischen Schweißschablonen, wie sie etwa aus der JP-A-55030329 bekannt ist, äußerst arbeits- und kostenaufwändig. Robotergesteuerte Systeme mit fest vorprogrammierten Schweißpositionen hingegen lassen Werkstücktoleranzen und Lageabweichungen des Werkstücks bezüglich des Roboters unberücksichtigt und arbeiten dementsprechend ungenau. Um dem zu begegnen, enthalten die etwa aus der EP 02 97 031 A1 bekannten Schweißsysteme zusätzliche, der Robotersteuerung zugeordnete Regelkreise, welche die Werkstückkontur durch elektrische oder optoelektronische Abstandssensoren abtasten und in die Robotersteuerung derart eingreifen, dass die vorprogrammierte nach Maßgabe der aus der abgetasteten Werkstückkontur und dem Funktionsmaß errechneten Schweißposition korrigiert wird. Solche Regelkreise erfordern jedoch einen erhöhten Bau- und Rechenaufwand und sind störanfällig, und vor allem bei ausgedehnteren Werkstücken liegt die Positionsgenauigkeit des Schweißbolzens bei derartigen Schweißsystemen aufgrund von Roboterinstabilitäten und Nichlinearitäten in der Signalverarbeitung immer noch in einem relativ großen Toleranzbereich von größenordnungsmäßig 1 mm.

Aufgabe der Erfindung ist es, das robotergesteuerte Bolzenschweißsystem sowie das Positionierverfahren der eingangs genannten Art so auszubilden, dass das werkstückbezogene Funktionsmaß des Schweißbolzens selbst bei ausgedehnten Werkstücken auf baulich einfache und zuverlässig wiederholbare Weise in einem engen Toleranzbereich gehalten wird.

Diese Aufgabe wird erfindungsgemäß durch das im Patentanspruch 1 angegebene Bolzenschweißsystem bzw. das im Anspruch 5 angegebene Verfahren gelöst.

Erfindungsgemäß wird durch die Kombination einer programmgeführten Robotersteuerung mit einer in Richtung des vorgegebenen Funktionsmaßes selbsttätigen, elasto-mechanisch anschlaggesteuerten Feinjustierung des Bolzenschweißkopfes unter Verzicht auf aufwändige, verzögerungsbehaftete und störanfällige, elektrische Zusatzregelungen eine baulich unkomplizierte, weitgehend störsichere und hochexakte Schweißbolzenpositionierung mit Funktionsmaßtoleranzen von weniger als ± 0,5 mm erreicht und damit erstmals das in der Automobilindustrie seit langem bestehende Problem eines maßgenauen, automatisierten Verschweißens von T-Bolzen an Rohkarosserieteilen mit minimalem Konstruktionsaufwand gelöst.

In weiterer, baulich und steuerungsmäßig besonders bevorzugter Ausgestaltung der Erfindung wird der Bolzenschweißkopf durch den Roboter in eine fest vorgegebene Halteposition im Sicherheitsabstand zum Werkstück verfahren und mit Hilfe eines zwischen Roboterhand und Bolzenschweißkopf wirksamen, pneumatischen Linearantriebs in die kraftbegrenzte Anschlagposition gebracht, wobei die Anlagekraft des Anschlags an der Werkstückkontur auf baulich einfache Weise durch ein dem Pneumatikantrieb zugeordnetes, variabel einstellbares Druckregelventil anwendungsspezifisch vorgewählt werden kann.

Um zu verhindern, dass sich Oberflächenfehler, z. B. Schweißspritzer auf der Werkstückkontur nachteilig auf die Positioniergenauigkeit auswirken, wird der Flächenkontakt zwischen Anschlag und Werkstückkontur vor der Freigabe des Schweißvorgangs vorzugsweise durch einen am Anschlag befestigten, elektrischen Abstandssensor überwacht.

Die Erfindung wird nunmehr anhand eines in den Figuren stark schematisiert dargestellten Ausführungsbeispieles näher erläutert. Es zeigen
- **Fig. 1**: ein robotergesteuertes Bolzenschweißsystem nach der Erfindung in der Schweißposition an einer Dachkanal-Seitenwand;
- **Fig. 2**: eine vergrößerte Teildarstellung des Ausführungsbeispieles gem. Fig. 1;
- **Fig. 3**: das Bolzenschweißsystem nach Fig. 1 in der Schweißposition am Dachkanalboden; und
- **Fig. 4**: das Blockschaltbild des pneumatischem Linearantriebs.

Das in den Fig. gezeigte Bolzenschweißsystem enthält einen programmgesteuerten Mehrachsroboter 1 und einen an der Roboterhand 2 montierten Bolzenschweißkopf 3 mit einem Bolzenzufuhrschlauch 4 und einer Bolzen-Spannzange 5, durch welche der jeweils zu befestigende Schweißbolzen 6, z. B. ein mit einem erweiterten Bolzenkopf versehener T-Bolzen zur Befestigung von Anbauteilen, in Bolzenachsrichtung A senkrecht zur Werkstückfläche bis zum Werkstückkontakt vorgeschoben und mit dieser anschließend im Wege des Hubzündverfahrens verschweißt wird.

Der Bolzenschweißkopf 3 ist jedoch nicht starr mit der Roboterhand 2 verbunden, sondern an dieser senkrecht zur Bolzenvorschubachse A verschieblich geführt und durch einen pneumatischen Linearantrieb 7 in Verschieberichtung angetrieben. Der Pneumatikantrieb 7 ist an die Druckluftquelle 8 (Fig. 4) über ein Zweistellungsventil 9 zur Hubumkehr sowie ein variabel einstellbares Druckregelventil 10 angeschlossen, durch das der Arbeitsdruck und somit die Betätigungskraft des Pneumatikantriebs 7 auf einen vorgewählten Maximalwert begrenzt werden.

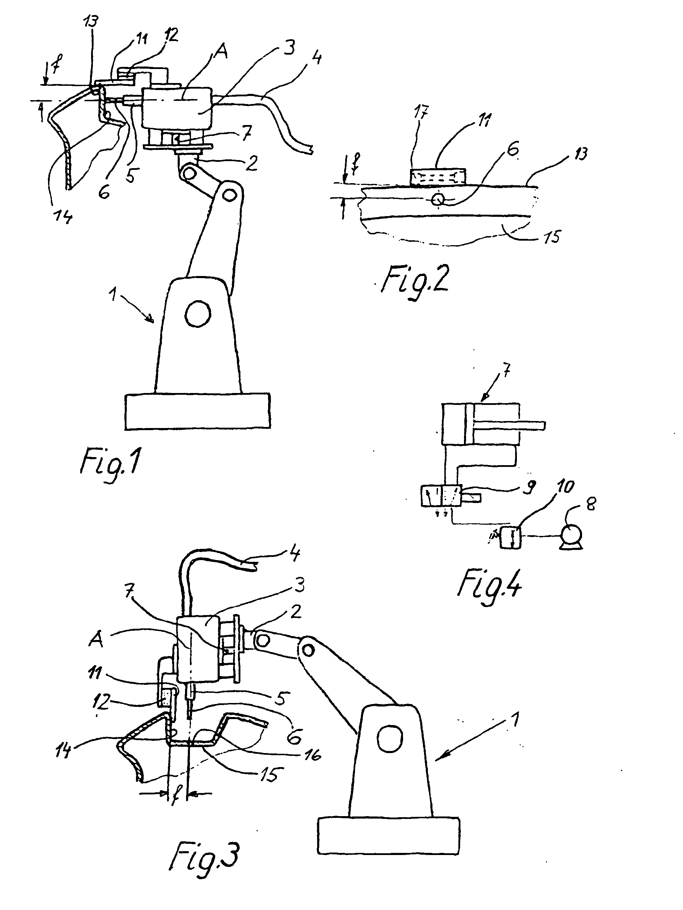

Mit dem Bolzenschweißkopf 3 ist ferner eine Anschlagleiste 11 parallel zur Bolzenvorschubachse A fest verbunden. Der Abstand f zwischen Anschlagleiste 11 und Bolzenvorschubachse A wird mit Hilfe von Distanzstücken 12 so bemessen, dass er mit dem konstruktionsmäßig festgelegten, werkstückbezogenen Funktionsmaß des Schweißbolzens 6, gegeben durch den Abstand der Schweißbolzenmitte zur Werkstückkontur, also zum Dachkanalrand 13 gemäß den Fig. 1 und 2 bzw. zur Seitenwand 14 des Dachkanals 15 gemäß Fig. 3, übereinstimmt.

Im Betrieb wird zunächst der Pneumatikantrieb 7 in die Hubendlage verfahren und der Bolzenschweißkopf 3 durch den Roboter 1 in eine fest vorprogrammierte Halteposition transportiert, in der die Bolzenachse A senkrecht zur Werkstückfläche (Seitenwand 14 nach Fig. 1 bzw. Dachkanalboden 16 nach Fig. 3) ausgerichtet ist und die Anschlagleiste 11 einen ausreichenden Sicherheitsabstand zur entsprechenden Werkstückkontur 13 bzw. 14 aufweist. Anschließend wird der Pneumatikantrieb 7 umgesteuert und dadurch der Bolzenschweißkopf 3 senkrecht zur Werkstückkontur, also zum Dachkanalrand 13 nach den Fig. 1 und 2 bzw. zur Seitenwand 14 nach Fig. 3, bis zur - durch das Druckregelventil 10 - kraftbegrenzten Anlage des Anschlags 11 an der Werkstückkontur verfahren, woraufhin die Schweißposition des Bolzenschweißkopfes 3 erreicht ist und der Abstand der Bolzenachse A zur Werkstückkontur exakt dem konstruktiv vorgegebenen Funktionsmaß f entspricht. Nachfolgend wird der Schweißbolzen 6 mit der Seitenwand 14 bzw. dem Dachkanalboden 16 verschweißt und der beschriebene Vorgang kann an einer anderen Stelle des Dachkanals 15 mit dem gleichen Funktionsmaß f wiederholt werden.

Aus Gründen einer erhöhten Funktionssicherheit ist im Kontaktbereich der Anschlagleiste 11 ein Abstandssensor in Form eines elektrischen Näherungsschalters 17 (Fig. 2) angeordnet, der den Schweißvorgang nur bei einem Flächenkontakt der Anschlagleiste 11 an der Werkstückkontur 13 bzw. 14 freigibt, diesen aber bei Oberflächenfehlern, etwa Schweißspritzern an der Werkstückkontur, welche zu einer Fehlpositionierung des Schweißbolzens 6 führen würden, blockiert und eine Fehlermeldung erzeugt.

Bei der praktischen Erprobung des geschilderten Bolzenschweißsystems hat sich gezeigt, dass das Funktionsmaß f selbst bei ausgedehnten Werkstücken auf einen Toleranzbereich von weniger als ± 0,5 mm begrenzt werden konnte.

## Patentansprüche

1. Bolzenschweißsystem, insbesondere zum Verschweißen von T-Bolzen an Rohkarosserieteilen, mit einem robotergesteuerten, den Schweißbolzen im wesentlichen senkrecht zur Werkstückfläche vorschiebenden und mit dieser verschweißenden Bolzenschweißkopf, wobei die Bolzenvorschubachse in der Schweißposition des Bolzenschweißkopfes einen als Funktionsmaß vorgegebenen Abstand zur Werkstückkontur aufweist, **dadurch gekennzeichnet, dass**
der Bolzenschweißkopf (3) durch einen stellkraftbegrenzten Antrieb (7) quer zur Bolzenvorschubachse (A) in Richtung der Werkstückkontur (13;14) verfahrbar und mit einem im Abstand des Funktionsmaßes (f) bewegungsfest mit dem Bolzenschweißkopf verbundenen, in der Anlageposition an der Werkstückkontur (13;14) die Stellbewegung des Bolzenschweißkopfes mechanisch blockierenden Anschlag (11) versehen ist.

2. Bolzenschweißsystem nach Anspruch 1, **dadurch gekennzeichnet, dass** der Bolzenschweißkopf (3) durch den Roboter (1) programmgesteuert vorpositioniert und als Stellantrieb (7) ein den Anschlag (11) in kraftbegrenzte Anlage an der Werkstückkontur (13;14) verfahrender, pneumatischer Linearantrieb zwischen Roboterhand (2) und Bolzenschweißkopf vorgesehen ist.

3. Bolzenschweißsystem nach Anspruch 2, **dadurch gekennzeichnet, dass** die Anlagekraft des Anschlags (11) an der Werkstückkontur (13;14) durch ein dem pneumatischen Linearantrieb (7) zugeordnetes Druckregelventil (10) variabel voreinstellbar ist.

4. Bolzenschweißsystem nach einem der vorhergehenden Ansprüche, **dadurch gekennzeichnet, dass**
der Anschlag (11) mit einem elektrischen Abstandssensor (17) zur Überprüfung des Flächenkontakts zwischen Anschlag und Werkstückkontur (13;14) versehen ist.

5. Verfahren zum Positionieren eines robotergesteuerten Bolzenschweißkopfes in einem als Funktionsmaß vorgegebenen Abstand der Bolzenvorschubachse zu einer Werkstückkontur in der Weise, dass
- der Bolzenschweißkopf quer zur Bolzenvorschubachse stellkraftbegrenzt in Richtung der Werkstückkontur bewegt und
- die Stellbewegung in der Schweißposition der Bolzenvorschubachse **dadurch** mechanisch blockiert wird, dass ein fest mit dem Bolzenschweißkopf verbundener, seitlich gegenüber der Bolzenvorschubachse um das Funktionsmaß versetzter Anschlag in stellkraftbegrenzte Anlage an der Werkstückkontur gelangt.

## Claims

1. A stud welding system, especially for welding T-studs to car shell parts, comprising a robot-controlled stud welding head which pushes the stud substantially at right angles to the workpiece surface and welds it thereto, wherein the stud feed axis, when the head is in the welding position, is at a distance from the workpiece contour set in the form of a functional dimension, **characterised in that**
the stud welding head (3) is movable by a power-limited actuator (7) transversely of the stud feed axis (A) in the direction towards the workpiece contour (13; 14) and comprises a stop non-displaceably connected to the stud welding head at the functional spacing (f) and mechanically blocking the adjusting movement of the stud welding head when in the position abutting the workpiece contour (13; 14).

2. A stud welding system according to claim 1, **characterised in that**
the stud welding head (3) is pre-positioned by a robot (1), controlled by a program, and the actuator (7) is a pneumatic linear drive between the robot hand (2) and the stud welding head, moving the stop (11) into power-limited abutment against the workpiece contour (13; 14).

3. A stud welding system according to claim 2, **characterised in that**
the force with which the stop (11) abuts the workpiece contour (13; 14) is variable and pre-adjustable by a pressure regulating valve (10) associated with the pneumatic linear drive (7).

4. A stud welding system according to any of the preceding claims,
**characterised in that**
the stop (11) comprises an electric distance sensor (17) for checking the surface contact between the stop and the workpiece contour (13; 14).

5. A method of positioning a robot-controlled stud welding head at a distance set in the form of a functional dimension between the stud feed axis and a workpiece contour, such that
- the stud welding head is moved with limited power transversely of the stud feed axis and towards the workpiece contour and
- when the stud feed axis is in the welding position, the adjusting movement is mechanically blocked in that a stop permanently connected to the stud welding head and laterally offset by the function dimension relative to the stud feed axis is brought into power-limited abutment against the workpiece contour.

## Revendications

1. Système de soudage de goujons notamment pour souder des goujons en T à des pièces de carrosserie brutes, à l'aide d'une tête de soudage de goujons, commandée par un robot, avançant le goujons à souder pratiquement perpendiculairement à la surface de la pièce et le soudant avec cette tête de soudage de goujons, l'axe d'avancée du goujons, dans la position de soudage de la tête de soudage de goujons, ayant une distance prédéterminée comme mesure fonctionnelle, par rapport au contour de la pièce,
**caractérisé en ce que**
la tête de soudage de goujons (3) est déplacée transversalement à l'axe d'avancée de goujons (A) dans la direction du contour de pièce (13, 14) par un moyen d'entraînement (7) limitant la force d'actionnement, et elle comporte une butée de blocage mécanique du mouvement d'actionnement de la tête de soudage de goujons, cette butée étant reliée solidairement en mouvement à la tête de soudage de goujons, à la distance de mesure fonctionnelle, dans la position d'appui contre le contour de la pièce (13, 14).

2. Système de soudage de goujons selon la revendication 1,
**caractérisé en ce que**
la tête de soudage de goujons (3) est pré-positionnée de manière commandée par programme, par le robot (1), et l'entraînement d'actionnement (7) est un entraînement linéaire pneumatique déplaçant la butée (11) en appui avec une force limitée, contre le contour de pièce (13, 14), entre la main (2) du robot et la tête de soudage de goujons.

3. Système de soudage de goujons selon la revendication 2,
**caractérisé en ce que**
la force d'application de la butée (11) contre le contour de pièce (13, 14) est préréglée de manière variable par une soupape de régulation de pression (10) associée à l'entraînement linéaire pneumatique (7).

4. Système de soudage de goujons selon l'une quelconque des revendications précédentes,
**caractérisé en ce que**
la butée (11) est munie d'un capteur électrique de distance (17) pour contrôler le contact de surface entre la butée et le contour de pièce (13, 14).

5. Procédé de positionnement d'une tête de soudage de goujons à commande par robot à une distance prédéterminée, comme mesure fonctionnelle de l'axe d'avancée du goujons par rapport au contour de la pièce de façon que
- la tête de soudage de goujons soit déplacée transversalement à l'axe d'avancée de goujons, avec une force d'actionnement limitée dans la direction du contour de la pièce, et
- le mouvement d'actionnement dans la position de soudage dans l'axe d'avancée du goujons est bloqué mécaniquement par une butée solidaire de la tête de soudage de goujons, décalée latéralement par rapport à l'axe d'avancée du goujon, d'une mesure fonctionnelle, et elle arrive en appui de limitation de force d'actionnement contre le contour de la pièce.
